# EUROPÄISCHE PATENTSCHRIFT

(11) **EP 3 078 907 B1**
(45) Veröffentlichungstag und Bekanntmachung des Hinweises auf die Patenterteilung: **02.12.2026**
(21) Anmeldenummer: 16164710.2
(22) Anmeldetag: 11.04.2016
(51) Int. Cl.: F21V 31/00, F21V 3/00, F16J 15/02, F16J 15/06, F21V 17/12, F21S 8/06

(54) **FEUCHTRAUMLEUCHTE SOWIE DICHTELEMENT FÜR EINE SOLCHE LEUCHTE**
DAMP-PROOF LAMP AND SEAL ELEMENT FOR SUCH A LAMP
LAMPE POUR LOCAUX HUMIDES ET JOINT POUR UNE TELLE LAMPE

(30) Priorität: 10.04.2015 DE 102015105506
(43) Veröffentlichungstag der Anmeldung: 12.10.2016
(73) Patentinhaber: Trilux GmbH & Co. KG, 59759 Arnsberg (DE)
(72) Erfinder: Warnsing, Daniel, 48727 Billerbeck (DE)
(74) Vertreter: Lippert Stachow Patentanwälte Rechtsanwälte

(56) Entgegenhaltungen:
- EP-A1- 1 004 820
- AT-U1- 5 725
- CN-B- 102 032 343
- DE-A1- 102008 034 294
- DE-A1- 102010 060 395
- DE-A1- 4 205 442
- DE-B- 1 158 393
- DE-U1- 29 810 708
- DE-U1- 9 410 772
- GB-A- 2 209 069
- US-A- 4 633 377
- US-A1- 2011 063 831
- US-A1- 2013 170 207

## Beschreibung

Allgemein betrifft die Erfindung eine Leuchte hoher Schutzart gemäß EN 60 529, auch als IP-Schutzart bezeichnet, sowie eine Dichtelement ausgebildet zum Einsetzen und Abdichten eines Verbindungsbereich zwischen einem Leuchtengehäuse und zur Realisierung einer definierten Schutzart. Derartige Leuchten zur Verwirklichung von definierten Schutzarten werden häufig auch als "Feuchtraumleuchten" bezeichnet.

Das Dichtelement umfasst einen vorzugsweise ringförmig geschlossenen Grundkörper aus einem elastischen Material, welcher in Einbaulage in dem Leuchtengehäuse eine Hauptdichtebene definiert, die vorzugsweise parallel nach innen versetzt zu einer Lichtaustrittsöffnung des Leuchtgehäuses in diesem angeordnet ist und gegen den die Leuchtenabdeckung dichtend anliegt.

### Stand der Technik

Aus dem Stand der Technik ist bekannt, wannen- oder schalenförmige Leuchtengehäuse mit einem in Einbaulage oben gelegenen horizontalen Befestigungsabschnitt an einem Bauträger zu befestigen, so dass der "offene" Aufnahmebereich des Leuchtengehäuses nach unten ragt, in welches dann das Leuchtmittel und die Optik eingesetzt werden. Das Leuchtengehäuse definiert üblicherweise einen umlaufenden Dichtrand, auf welchen eine lichtdurchlässige, vorzugsweise transluzente Leuchtenabdeckung aufsetzbar ist.

Der an diesem Dichtrand ausgebildete Verbindungsbereich zwischen dem Leuchtengehäuse und der Leuchtenabdeckung kann zur Erfüllung höherer Schutzarten, also z.B. IP68 bei älterem Stand der Technik einen Rahmen umfassen, welcher die Leuchtenabdeckung, umfänglich eingefasst mit einem klammerartigen oder U-förmigen Profil. Dieses Profil wird innenseitig mit Klebemittel versehen, welches einen sicheren Verbund darstellt und gleichzeitig die notwendige Abdichtung realisiert.

Heute werden zunehmend aus Gründen des Designs Leuchten ohne einen solchen die Abdeckung umfassenden Rahmen gewünscht, die insofern als "rahmenlose Abdeckungen" bezeichnet werden. Bei diesen wird die häufig nur als Scheibe ausgebildete Leuchtenabdeckung mit einem einfassenden Rand der Leuchte verklebt, wofür diese Abdeckscheibe zusätzlich einen Siebdruck am umlaufenden Rand aufweisen, um eine Haftfläche für den Kleber bereitzustellen.

Bei einer alternativen Ausführungsform umfasst der Verbindungsbereich eine umlaufenden Auflagefläche in der Ebene parallel versetzt ins Leuchtengehäuse zur Lichtaustrittsebene vor, in welchen die Leuchtenabdeckung bzw. die Scheibe flächig einsetzbar ist und wobei im Bereich der Auflagefläche zwischen dem umlaufenden Rahmen bzw. dem Flansch und der Scheibenabdeckung bzw. der Leuchtenabdeckung Kleber zur Verbindung und zur Abdichtung eingebracht wird.

Eine gattungsgemäße Leuchte ist bekannt aus EP 1 004 820 A1.

Weiterer Stand der Technik ist bekannt aus DE 10 2010 060 395 A1, CN 102 032 343 B, AT 5 725 U1, DE 10 2008 034 294 A1, US 2013/170 207 A1, US 2011/063 831 A1 und DE 11 58 393 B.

### Nachteile am Stand der Technik

Nachteilig an diesen Abdeckungen ist die schlechte Revisionierbarkeit, also das Abnehmen bzw. Entfernen der Scheibe bzw. Abdeckung für die Wartung, wobei die Scheibe und teilweise auch das Gehäuse zerstört werden.

### Technisches Problem / Aufgabe

Die Erfindung befasst sich mithin mit dem Problem (Aufgabe), die eingangs genannten Nachteile zumindest teilweise zu vermeiden und insbesondere ein Dichtelement für eine Feuchtraumleuchte sowie eine rahmenlose Feuchtraumleuchte vorzusehen, welche einfacher revisionierbar ist, also einfach zu warten ist.

### Erfindung

Gelöst wird dieses technische Problem bereits durch eine Feuchtraumleuchte mit den Merkmalen des Anspruchs 1. Die Feuchtraumleuchte umfasst ein Leuchtengehäuse mit einem Leuchtmittelraum zur Aufnahme eines Leuchtmittels und einer diesem Leuchtmittel zugeordneten Optik sowie eine an einem Verbindungsbereich mit dem Leuchtengehäuse verbindbare Leuchtenabdeckung zum schutzartkonformen Verschließen zumindest des Leuchtmittelraums. Der Verbindungsbereich ist mittels eines Dichtelements abgedichtet. Das Dichtelement umfasst einen Grundkörper, der ausgebildet ist zum Einsetzen in das abzudichtende Leuchtengehäuse, um den Verbindungsbereich zwischen dem Leuchtengehäuse und der mit diesem verbindbaren Leuchtenabdeckung, die eine Oberseite und einem Umfangsrand aufweist, schutzartkonform abzudichten. An dem Grundkörper sind zwei Dichtelemente vorgesehen, und zwar eine erstes, über einen Verbindungsarm mit dem Grundkörper verbundenes Randdichtelement ausgebildet zum Abdichten eines Spalts zwischen der Außenseite der Leuchtenabdeckung und der Innenseite des Leuchtengehäuses, sowie ein zweites Aufsatzdichtelement, welches ausgebildet ist zum Abdichten der Oberseite der Leuchtenabdeckung, insbesondere im Randbereich. Im Gegensatz zum Stand der Technik fungiert der Grundkörper somit nicht nur als Dichtelement, sondern dient auch als Träger der beiden Dichtelemente, also des Randdichtelements zur Realisierung eines ersten Dichtabschnitts zwischen Leuchtengehäuse und Leuchtenabdeckung und des Aufsatzdichtelements zur Realisierung eines zweiten Dichtabschnitts auf der Oberseite der Leuchtenabdeckung, vorzugsweise in dessen Randbereich.

Das als erster Dichtabschnitt fungierende Randdichtelement ist ausgebildet, um von der Hauptdichtebene nach unten erstreckend den Verbindungsbereich zwischen dem Außenrand Leuchtenabdeckung und der Innenwand des Leuchtengehäuses unter Formschluss abzudichten. Das Randdichtelement sitzt somit in Einbaulage dichtend eingeklemmt in dem Spalte zwischen Leuchtenabdeckung und Leuchtengehäuse, weshalb dieses vorzugsweise breiter ist als dieser Spalt, in Einbaulage also zur Abdichtung komprimiert wird. Das Randdichtelement realisiert somit eine flächige Abdichtung des Verbindungsbereichs.

Eine nahezu konstante Anpresskraft zur Vermeidung von Glasbruch durch Aufbringen ungewünschter Kräfte bei der Montage der Abdeckung wird vermieden durch das Verbinden des Randdichtelements mit dem Grundkörper über den elastischen Verbindungsarm. Dieser Verbindungsarm ermöglicht einen besonders hohen Toleranzausgleich, der etwa 75 Prozent größer ist als bei der Verwendung von Klebern oder traditionellen Dichtlippen. Dieser vorzugsweise einstückig an dem Dichtelement ausgebildete elastische Verbindungsarm zur Verbindung des Grundkörpers mit dem Randdichtelement dient dazu, ein gleichmäßiges Anliegen des Randdichtelements an dem Umfangsrand der Leuchtenabdeckung und des Leuchtengehäuses zu gewährleisten, was insbesondere dadurch erzielt wird, dass der Verbindungsarm und das Randdichtelement zusammen einen Winkelhebel mit zwei Drehpunkten bilden, von denen ein erster Drehpunkt im Bereich der Verbindung des Verbindungsarms mit dem Grundkörper und ein zweiter Drehpunkt an einem Außenanlagepunkt des Randdichtelements ausgebildet zur Anlage an der Innenwand des Leuchtengehäuses angeordnet ist, wobei dieser Außenanlagepunkt vorzugsweise am in Einbaulage oberen Ende des Randdichtelements angeordnet ist.

Bei der Entwicklung der Erfindung hat sich eine bionische Ausbildung des Randdichtelements als besonders zweckmäßig erwiesen, wobei sich insbesondere eine Gestaltung als besonders zweckmäßig erwiesen hat, welche - im Querschnitt - im Wesentlichen den Aufbau eines menschlichen Fußes aufweist, wobei der Verbindungsarm an dem Grundkörper dem Unterschenkel entspricht, der den Außendrehpunkt des Randdichtelements dem Bereich der Ferse entspricht und eine Außendichtlippe ausgebildet zur dichtenden Anlage am Leuchtengehäuse des Randdichtelements dem Fuß mit den Zehen entspricht.

Vorzugsweise weist das Randdichtelement zwischen dem oberen Außendrehpunkt und der unteren Außendichtlippe eine konkave Wölbung auf, welche sich somit im Rahmen der Montage durch die Drehung um den Außendrehpunkt dichtend gegen die Innenseite des Leuchtengehäuses anlegt.

Ferner kann das Randdichtelement an seiner der Leuchtenabdeckung zugewandten Innenseite eine Innendichtlippe umfassen, welche die Oberseite der Leuchtenabdeckung in Einbaulage dichtend einfasst.

Das Randdichtelement kann zum Vereinfachen bzw. zur Verbesserung des Einsetzens und insbesondere der Zentrierung der Leuchtenabdeckung im Verhältnis zum Leuchtengehäuse eine Zentrierhilfe aufweisen, die vorzugsweise als eine an der Innenseite des Multifunktionsdichtelements ausgebildete Einlaufschräge bzw. Einlaufebene ausgebildet ist. Diese Einlaufschräge weist vorzugsweise einen umlaufenden Rand von 1,5 mm auf.

Wegen der Vielzahl der Funktionen kann das Randdichtelement auch als Multifunktionsdichtelement bezeichnet werden.

Beide Dichtelemente, also das Rand- und das Aufsatzdichtelement weisen vorzugsweise somit mehrere Dichtlippen auf. Das Oberdichtelement kann zur Verbesserung der Dichtleistung mehrere zueinander beabstandete Dichtlippen umfassen, wobei insbesondere drei Dichtlippen besonders gute Ergebnisse erzielt haben.

Die erfindungsgemäße Dichtung bildet in Einbaulage in dem Leuchtengehäuse vorzugsweise eine Hauptdichtebene, die sich vorzugsweise am Umfangsrand bzw. an der Fügestelle zwischen Leuchtengehäuse und Leuchtenabdeckung quer erstreckend zur optischen Achse des durch das Leuchtmittel ausgestrahlten Lichtstroms erstreckt.

Bevorzugt ist diese Dichtung als geschlossenes Ringprofil ausgebildet.

Für die Vereinfachung der Montage hat es sich als besonders zweckmäßig erwiesen, wenn das Rand- und Aufsatzdichtelement an der Unterseite eines Grundkörpers ausgebildet sind, der in Einbaulage die Hautdichtebene definiert.

Bei der besonders bevorzugten Ausführungsform sind das Aufsatzdichtelement und das Randdichtelement einstückig an diesem Grundkörper angeformt, das Aufsatzdichtelement unmittelbar und das Randdichtelement unterseitig beabstandet über den elastischen Verbindungsarm.

Der Verbindungsarm ist vorzugsweise stegartig ausgebildet, also schmaler als das Aufsatzdichtelement und das Randdichtelement, um die gewünschte seitliche Beweglichkeit des Randdichtelements für den Toleranzausgleich und für die Montage zu ermöglichen.

Zur Reduzierung der Strömungsgeschwindigkeit von Strahlwasser hat es sich als zweckmäßig erwiesen, zwischen den einzelnen Dichtabschnitten des Dichtelements Strömungsreduzierungskammern vorzusehen, in welchen das einströmende Wasser unter Reduzierung der kinetischen Energie eintritt. Diese Strömungsreduzierungsmittel sind vorzugsweise taschenförmig als Taschenkammern in Form von Materialausnehmungen ausgebildet. Vorzugsweise ist eine erste Außentaschenkammer zwischen Randdichtelement, Verbindungsarm und Grundkörper und eine zweite Innentaschenkammer zwischen Randdichtelement und Aufsatzdichtelement vorgesehen.

Durch diese Strömungsreduzierungskammern wird aber auch gewährleistet, dass die vorzugsweise als Glas bestehende Leuchtenabdeckung eine konstante Krafteinwirkung erfährt, das beim Einsetzen der Leuchtenabdeckung komprimierte Dichtungsmaterial sich verformt und in die Dichtkammern eintreten kann, so dass keine größere Krafteinwirkung auf die Leuchtenabdeckung auftritt. Durch diese Ausgestaltung wird somit ein Bruch der Abdeckung beim Einbau ausgeschlossen, so dass die Montage auch problemlos durch ungeübtes Personal ohne weiteres vorgenommen werden kann.

Eine besonders gute Abdichtung, insbesondere für die Verwirklichung hoher Schutzarten von IP68 und höher sowie für eine hohe Langlebigkeit, wird durch eine Materialpaarung umfassend Aluminium für das Leuchtengehäuse, vorzugsweise ausgebildet als Aluminiumdruckgusskörper, i.V.m. einer elastomeren Dichtung erzielt, wobei sich EPDM als besonders vorteilhaft erwiesen hat, welches einen hohen Haftreibungskoeffizienten auf Aluminium aufweist. Gleichfalls möglich ist jedoch auch die Verwendung eines PMMA.

Vorzugsweise ist der Grundkörper als geschlossener Ringkörper ausgebildet und die Dichtabschnitte sind einstückig an dem Grundkörper angeformt, womit dieses besonders einfach verbaubar ist mittels einsetzen.

Zur Verbesserung der Revisionierbarkeit einer insbesondere als Glasscheibe ausgebildeten Leuchtenabdeckung, die über mindestens ein, diese Leuchtenabdeckung an einer Durchgangsöffnung durchdringendes Halteelement lösbar mit dem Leuchtgehäuse verbindbar ist, wird ferner eine Schraubendichtanordnung offenbart, die eine besondere Halteschraube mit einer korrespondierenden Ringdichtung zur Abdichtung der Durchgangsöffnung sowie ein optionales Distanzelement umfasst.

Die Halteschraube umfasst vorzugsweise einen tellerförmig bzw. kreisringförmig ausgebildeten Anpressabschnitt zum flächigen Anliegen gegen die Unterseite der Leuchtenabdeckung um den Bereich einer Durchgangsöffnung in der Leuchtenabdeckung und einen, sich vorzugsweise quer zur Ebene des Anpressabschnitts erstreckenden Gewindestift zum Eindrehen in eine korrespondierende Gewindeöffnung an dem Leuchtengehäuse. Der Durchmesser des Anpressabschnitts ist vorzugsweise doppelt so groß wie der Durchmesser der Durchgangsöffnung.

Anstelle einer Schraubverbindung kann die Verbindung z.B. auch als lösbare Rastverbindung ausgebildet sein. Diese Halteschrauben werden vorzugsweise mit 1,5 Nm angezogen, wodurch ein Anpressdruck von max. 8 N/mm² erzeugt wird.

Zwischen dem Gehäuse und der Oberseite der Leuchtenabdeckung kann zur Vermeidung eines Anschlags der Scheibe an dem Gehäuse durch zu starkes Anziehen der Halteschraube ein kreisringförmiges Distanzelement mit einer zentralen Durchgangsöffnung für die Halteschraube eingesetzt sein, welches vorzugsweise aus einem Elastomer mit einem höheren Härtegrad besteht als die auf der Oberseite des tellerförmigen Anpressabschnitts der Halteschraube aufgesetzte Ringdichtung. Auf diese Weise wird eine schwimmende Lagerung der Leuchtenabdeckung am Gehäuse realisiert, was bedeutet, dass die Teile sich z.B. bei Erwärmung unterschiedlich ausdehnen und relativ zueinander bewegen können und somit Spannungsaufbau und eine mögliche Zerstörung der Leuchtenabdeckung wirksam vermieden wird.

Diese schwimmende Lagerung und ein definierter Anzugswiderstand können z.B. dadurch realisiert werden, dass der Außenrand der Ringdichtung verbreitert ist, vorzugsweise beidseitig, was einen initialen Abstand des Anpressabschnitts der Halteschraube zu der Leuchtenabdeckung realisiert, der zunächst überwunden werden muss.

Bei einer bevorzugten Ausführungsform weist das zwischen Leuchtengehäuse und Scheibenoberseite angeordnete, ringförmige Distanzelement z.B. eine Härte von 80 Shore-A auf. Die den Anpressabschnitt der Halteschrauben umschließende elastomere Ringdichtung auf die Oberseite der Scheibe weist eine entsprechend geringere Härte auf.

Ein von dem Dichtungselement und der Feuchtraumleuchte getrennter Aspekt ist insofern diese Schraubenabdichtanordnung, umfassend die Halteschraube und die an diese angepasste Ringdichtung sowie alternativ das Distanzelement zur lösbaren und schutzartkonformen Befestigung einer vorzugsweise als Glasabdeckscheibe ausgebildeten Leuchtenabdeckung an einem Leuchtengehäuse, vorzugsweise ausgebildet aus Aluminium. Dieses Leuchtengehäuse kann einen oder mehrere Schraubdome aufweisen, in welche die Halteschrauben eindrehbar sind.

Die Erfindung betrifft insofern auch ein Dichtungsset, umfassend ein zuvor beschriebenes Dichtungselement, sowie mindestens eine Schraubendichtanordnung zum schutzartkonformen, also abgedichteten, i.S.v. IP-gesicherten Verbinden einer Leuchtenabdeckung mit einem Leuchtengehäuse. Schutzartkonform ist zu verstehen als entsprechend einer Schutzart oder zur Erfüllung der Schutzart gemäß DIN EN 60 529.

Es versteht sich für den Fachmann, dass das Dichtelement für jegliche Feuchtraumleuchten mit und ohne die Schraubendichtanordnung verwendet werden kann. Die Verwendung in Verbindung mit der Schraubendichtanordnung bei einer als Glasscheibe ausgebildeten Leuchtenabdeckung ist aber besonders vorteilhaft, weil dieses die Revisionierbarkeit erheblich vereinfacht.

Bei einer erfindungsgemäßen IP geschützten Leuchte wird zweckmäßigerweise ein Druckausgleichselement, vorzugsweise in Form einer Druckausgleichsmembran, eingesetzt, welche die Zerstörung der Leuchtenabdeckung durch die Ausdehnung des Gases in der Leuchte kompensiert.

In der folgenden ausführlichen Beschreibungen wird auf die beigefügten Zeichnungen Bezug genommen, die Teil dieser bilden, und in denen zur Veranschaulichung spezifische Ausführungsformen gezeigt sind, in der die Erfindung ausgeübt werden kann. In dieser Hinsicht wird Richtungsterminologie wie etwa "oben", "unten", "vorne", "hinten", "vorderes", "hinteres", usw. in Bezug auf die Orientierung der beschriebenen Figur(en) verwendet. Da Komponenten von Ausführungsformen in einer Anzahl verschiedener Orientierung positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Die folgende ausführliche Beschreibung ist nicht im einschränkenden Sinne aufzufassen. Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration. In den Figuren werden identische oder ähnliche Elemente mit identischem Bezugszeichen versehen, soweit dieses zweckmäßig ist. Die Darstellungen sind im Wesentlichen maßstäblich. Zur Veranschaulichung von Details können jedoch bestimmte Bereiche für den Fachmann erkennbar übertrieben groß dargestellt sein. Darüber hinaus können die Zeichnungen plakativ vereinfacht sein und enthalten nicht jedes bei der praktischen Ausführung gegebenenfalls vorhandene Detail. Die Beschreibung erfolgt anhand einer Feuchtraumleuchte zur Erfüllung einer Schutzart höher IP 68. Es zeigen:

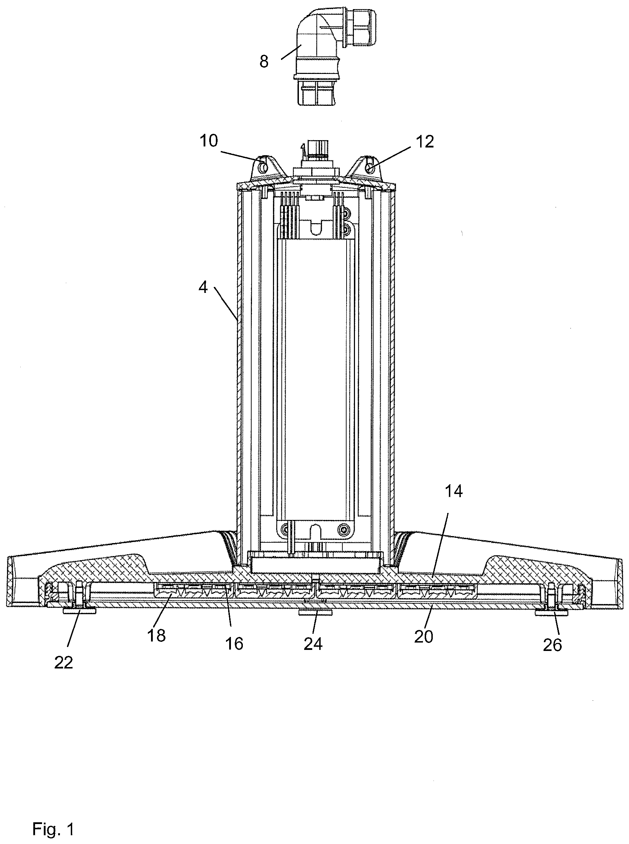

- Figur 1: einen Querschnitt der erfindungsgemäßen Feuchtraumleuchte;
- Figur 2: einen vergrößerten, teilweisen Querschnitt des unteren Tellergehäuses in Explosionsdarstellung mit Dichtelement und Abdeckscheibe;
- Figur 3: die Ansicht gemäß Figur 2 in Einbaulage, also mit Dichtelement und Abdeckscheibe in Einbaulage;
- Figur 4: einen vergrößerten Querschnitt der Halteschrauben zur Befestigung der Abdeckscheibe an dem Leuchtengehäuse in Explosionsdarstellung; und
- Figur 5: die Ansicht gemäß Figur 4 in Einbaulage.

Demnach ist die in ihrer Gesamtheit mit 2 bezeichnete Feuchtraumleuchte im Wesentlichen zweiteilig aufgebaut und umfasst ein in Einbaulage oberseitiges, hohlzylindrisches Zylindergehäuse 4 zur Aufnahme eines Betriebsgeräts 6 und umfassend einen um 90° abgewinkelten und lösbar aufsteckbaren Anschluss 8 zur Verbindung mit der Stromversorgung. Ferner sind an der Oberseite des Zylindergehäuses 4 mehrere, vorzugsweise drei auf einem gedachten Kreis um jeweils 120° zueinander versetzt angeordnete Befestigungsösen 10, 12 vorgesehen, mit denen die Feuchtraumleuchte 2 auch als Pendelleuchte von einer Decke abgehängt werden kann.

Es versteht sich von selbst, dass die Anschlusstechnik und die Verbindungstechnik schutzartkonform, also abgedichtet ausgebildet ist.

Am unteren Ende des Zylindergehäuses 4 ist ein sich quer zur Längsachse des Zylindergehäuses 4 erstreckendes, ringförmiges Tellergehäuse 14 befestigt, welches, wie das Zylindergehäuse 4, als Aluminiumdruckgusskörper ausgebildet ist.

Das Tellergehäuse 4 weist auf der Oberseite um einen zentralen Befestigungsabschnitt kreisringförmig angeordnete Kühlrippen alternierender Größe aufweist, so dass umlaufend alternierend jeweils ein großer und ein kleiner Kühlkörper vorgesehen sind. Die Unterseite des Tellergehäuses 4 weist einen Leuchtmittelraum zur Aufnahme eines LED-Moduls 16 auf. Das Tellergehäuse 14 fungiert somit im Wesentlichen als Kühlkörper für das LED-Modul 16.

In Strahlungsrichtung vor dem LED-Modul 16 ist eine Linsenanordnung 18 befestigt, welche jeder LED des LED-Moduls 16 eine entsprechende Kollimatorlinse zuordnet. Unterhalb dieser Linsenanordnung 18 ist eine Abdeckscheibe 20 aus Glas über vier Halteschrauben 22-26 von dem Tellergehäuse 14 abnehmbar, aber schutzartkonform befestigt.

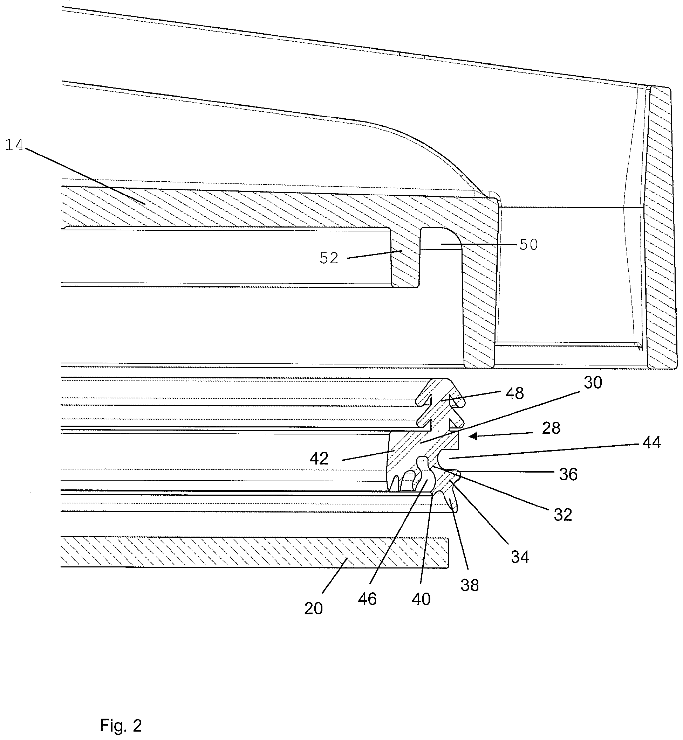

Die Figur 2 zeigt einen vergrößerten Ausschnitt im Querschnitt des Randbereichs des Tellergehäuses 14 mit gelöstem Dichtelement 28, welches vorzugsweise als geschlossenes Ringprofil ausgebildet ist, und das im Wesentlichen einen kreisringförmig ausgebildeten Grundkörper 30 umfasst, der eine Hauptdichtebene definiert. Von diesem Grundkörper 30 erstreckt sich ein einstückig angeformter, elastischer Verbindungsarm 32 nach unten, an dessen Ende ein als Multifunktionsdichtelement 34 ausgebildetes Randdichtelement angeformt ist, das im Querschnitt im Wesentlichen die Geometrie eines Fußes mit einem oberseitigen der Ferse entsprechenden Vorsprung 36 sowie einer unterseitigen Außendichtlippe 38 aufweist, wobei die Außendichtlippe 38 etwa doppelt so lang ausgebildet ist wie der Vorsprung 36 und zwischen Vorsprung 36 und Außendichtlippe 38 ein konkaver Wölbungsabschnitt ausgebildet ist), welcher zusammen mit dem Vorsprung 36 und der Außendichtlippe 38 die gesamte äußere Dichtfläche des Multifunktionsdichtelements 34 zur dichtenden Anlage an der Innenwand des Leuchtmittelraums in Einbaulage bildet. Auf der der Abdeckscheibe 20 zugewandten Innenseite weist das Multifunktionsdichtelement 34 eine etwa stabförmige abragende Innendichtlippe 40 auf. Auf der inneren Vorderseite weist das Multifunktionsdichtelement 34 eine umlaufende, die Zentrierung der Abdeckscheibe 20 vereinfachende Auflaufschräge 54 auf.

Neben dem Multifunktionsdichtelement 34 weist das Dichtelement 28 ebenfalls einstückig an den Grundkörper 30 angeformt das erfindungsgemäße Aufsatzdichtelement 42 auf, welches von dem Grundkörper 30 zunächst blockartig nach unten ragt und sodann in drei Dichtlippen übergeht, von denen die beiden kleineren, nach zur innen, zur Mitte der Leuchte gelegenen Dichtlippe etwa gleich lang sind und eine weiter nach außen gelegene Dichtlippe länger ausgebildet ist und auch einen größeren Zwischenraum aufweist. Zwischen dem Multifunktionsdichtelement 34 und dem Aufsatzdichtelement 42 ist eine taschenartig ausgebildete Außentaschenkammer 44 vorgesehen, welche also oberseitig von dem Grundkörper 30, innenseitig von dem Verbindungsarm 32 und am unteren Ende umschlossen wird. Zudem ist eine zweite, und ebenfalls taschenartig ausgebildet Innentaschenkammer 46 zwischen dem Multifunktionsdichtelement 34 und dem Aufsatzdichtelement 42 ausgebildet, welches also auf der äußeren Seite durch das Multifunktionsdichtelement 34, oberseitig durch die Unterseite des Grundkörpers 30, und auf der Innenseite durch die größte Dichtlippe der drei Dichtlippen am Aufsatzdichtelement 42 umschlossen wird.

Schließlich weist das Dichtelement 28 noch einen ebenfalls einstückig angeformten und sich quer zur durch den Grundkörper 30 definierten Ebene von diesem nach oben erstreckenden Einstecksteg 48 auf, der korrespondierend zu einer in der Oberseite des Leuchtengehäuses ausgebildeten Ringnut 50 ausgebildet ist, also in diesen einsteckbar ist, wozu außenseitig an dem Einstecksteg 48 jeweils beidseitig zwei beabstandete, elastische Einstecklippen angeformt sind, deren Außendurchmesser etwas größer gestaltet ist als der Innendurchmesser der Ringnut 50 des Leuchtengehäuses, so dass der Einstecksteg 48 in der Ringnut 50 in Einbaulage einklemmbar ist und wirksam ein Herausfallen des Dichtelements 28 aus der Ringnut 50 bei der Montage verhindert, zumindest aber bis die Abdeckscheibe 20 mit den Halteschrauben 22, 24, 26 befestigt wurde.

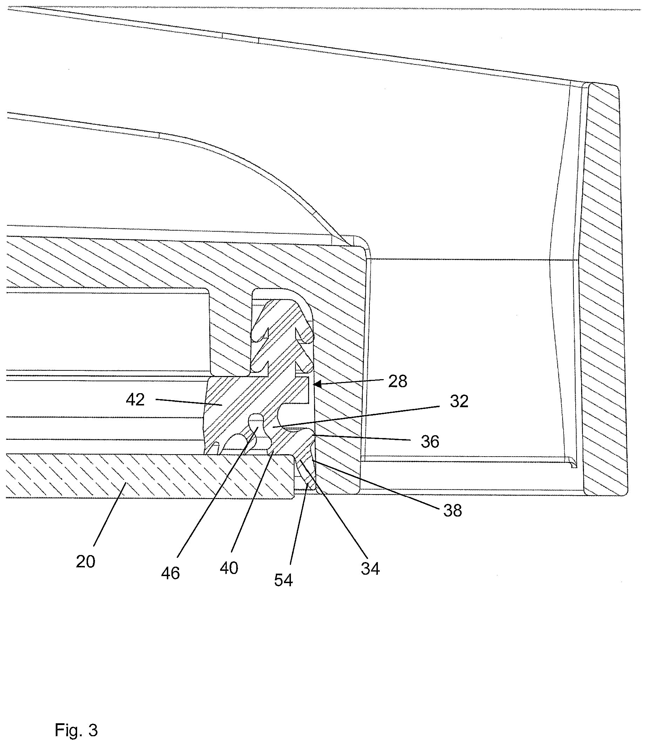

Die Figur 3 zeigt die Ansicht gemäß Figur 2 mit dem Dichtelement 28 und der Abdeckscheibe 20 verbaut zum Verschließen des Leuchtengehäuses, also in Einbaulage. In dieser Einbaulage liegt also die Oberseite des Grundkörpers 30 flächig an dem Innensteg 52 an, welcher die eine Seite der Ringnut 50 des Tellergehäuses 14 definiert. Der Einstecksteg 48 ist unter Vorspannung in die Ringnut 50 eingesteckt. Die Abdeckscheibe 20 ist von unten gegen die Innendichtlippe 40 gepresst, so dass diese oberseitig den Umfangsrand der Abdeckscheibe umfasst. Die Außenseite des Multifunktionsdichtelements 34 ist gegen die Innenseite des Leuchtmittelraums gepresst, so dass der Vorsprung 36 und die Dichtlippe 38 gegen die Innenwand des Leuchtmittelraums anliegen.

Diese Geometrie des über den Verbindungsarm 32 mit dem Grundkörper 30 verbundene Multifunktionsdichtelements 34 bewirkt beim Einsetzen der Abdeckscheibe 20 von unten eine Drehung um Vorsprung 36, der somit den definierten Drehpunkt der grundsätzlich als Winkelhebel aufgebauten Kombination aus Verbindungsarm 32 und Multifunktionsdichtelement 34 aufweist, wodurch die Außendichtlippe 38 an die Innenwand des Leuchtmittelraums unter Bildung eines Formschlusses anliegt und den Ringspalt zwischen äußerem Umfangsrand der Abdeckscheibe 20 und der Innenseite des Leuchtmittelraums dichtend und schutzartkonform schließt.

In Einbaulage liegen drei Dichtlippen des Aufsatzdichtelements 42 oberseitig und ebenfalls unter Vorspannung auf der Oberseite der Abdeckscheibe 20 an, so dass zwischen diesen drei Dichtlippen am unteren Ende des Aufsatzdichtelement 42 und dem Verbindungsarm 32 die zweite Dichtkammer 46 ausgebildet ist.

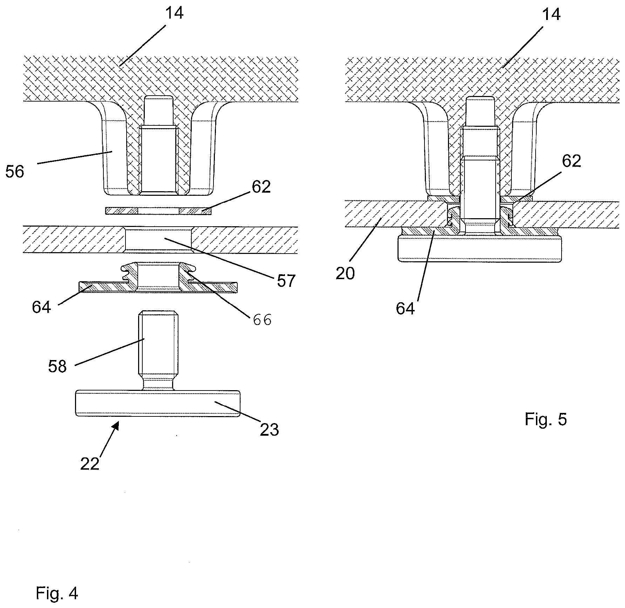

Die vergrößerten Querschnitte in den Figuren 4 und 5 zeigen exemplarisch eine der vier Schraubendichtanordnungen zur Befestigungen der Abdeckscheibe 20 an dem Tellergehäuse 14 mittels Halteschrauben 22 und die zur Abdichtung der Durchgangsöffnungen 57 verwendeten Dichtmittel.

Demnach bestehen diese Halteschrauben 22 aus einem scheibenförmigen Anpressabschnitt 23, dessen Außendurchmesser mindestens doppelt so groß wie die Durchgangsöffnung 57 ist zur Verwirklichung einer ausreichenden Anpressfläche, und von dem sich quer zur Ebene des Anpressabschnitts 23 ein Gewindestück 58 mit Außengewinde erstreckt.

Die Innenseite des Leuchtengehäuses umfasst vorliegend vier, auf einem Kreis nach innen versetzt angeordnete Schraubdome 56, jeweils umfassend ein Innengewinde zur Aufnahme der Gewindestücke 58 dieser Tellerschrauben 22, sind also mit einem korrespondierend zu den Außengewinden der Gewindestücke 58 ausgebildeten Innengewinden versehen.

Die Abdeckscheibe 20 umfasst vier korrespondierend zu den Schraubdomen 56 des Gehäuses in dieser auf einem Kreis vorgesehene Durchgangsöffnungen 57. Die Montage der Abdeckscheibe 20 erfolgt durch Einsetzen von Distanzringen 62 zwischen den unteren Enden der Schraubdomen 56 und der Oberseite der Abdeckscheibe 20 zur Unterbindung einer direkten Berührung zwischen Schraubdomen 56 und Oberfläche der Abdeckscheibe 20. Von der Unterseite der Scheibe her werden sodann eine elastische Ringdichtungen 64 in die Durchgangsöffnung 57 eingesetzt. Jede Ringdichtung 64 weist einen plattenförmigen Ringabschnitt, angepasst an die Größe des tellerförmigen Anpressabschnitts 23 der Halteschraube 22 auf und ist am äußeren Umfangsende mit einem nach unten und oben verlaufenden Vorsprung versehen, deren Höhe beim Anziehen der Abdeckschreibe 22 zunächst überwunden werden muss, so dass die elastische Ringdichtung 64 unter Vorspannung gegen die Unterseite der Abdeckscheiben 20 gepresst wird. Um die mittlere Durchgangsöffnung der Ringdichtung 64 herum weist diese einen angeformten Einsteckstutzen 66 mit zwei radial nach außen abragenden, elastischen Dichtlippen auf, deren Außendurchmesser größer ist als der Innendurchmesser der Durchgangsöffnung 57, so dass also die Dichtlippen in Einbaulage unter Vorspannung in der Durchgangsöffnung 57 sitzen und die Ringdichtung 64 in Einbaulage unverlierbar diesen aufgenommen ist. Gleichzeitig dichtet der Einsteckstutzen die Abdeckscheiben 20 umfänglich gegen die Halteschrauben 22 ab.

Der Distanzring 62 weist eine höhere Härte als die Ringdichtung 64 auf. Bei der vorliegenden Ausführungsform weist der Distanzring 62 eine Härte von 80 Shore-A, wogegen die Ringdichtung 64 eine geringere Härte aufweist.

### Bezugszeichenliste

- 2: Feuchtraumleuchte
- 4: Zylindergehäuse
- 6: Betriebsgerät
- 8: Anschluss
- 10: Befestigungsöse
- 12: Befestigungsöse
- 14: Tellergehäuse
- 16: LED-Modul
- 18: Linsenanordnung
- 20: Abdeckscheibe
- 22: Halteschraube
- 23: Anpressabschnitt
- 24: Halteschraube
- 26: Halteschraube
- 28: Dichtelement
- 30: Grundkörper
- 32: Verbindungsarm
- 34: Multifunktionsdichtelement
- 36: Vorsprung
- 38: Außendichtlippe
- 40: Innendichtippe
- 42: Aufsatzdichtelement
- 44: Außentaschenkammer
- 46: Innendichtkammer
- 48: Einstecksteg
- 50: Ringnut
- 52: Innensteg
- 54: Auflaufschräge
- 56: Schraubdom
- 57: Durchgangsöffnung
- 58: Gewindestück
- 62: Distanzring
- 64: Ringdichtung
- 66: Einsteckstutzen

## Patentansprüche

1. Feuchtraumleuchte umfassend ein Leuchtengehäuse mit einem Leuchtmittelraum zur Aufnahme eines Leuchtmittels und einer diesem Leuchtmittel zugeordneten Optik sowie einer an einem Verbindungsbereich mit dem Leuchtengehäuse verbindbaren Leuchtenabdeckung zum schutzartkonformen Verschließen zumindest des Leuchtmittelraums, wobei der Verbindungsbereich mittels eines Dichtelements (28) abgedichtet ist, das Dichtelement (28) umfassend einen Grundkörper (30), der ausgebildet ist zum Einsetzen in das abzudichtende Leuchtengehäuse, um den Verbindungsbereich zwischen dem Leuchtengehäuse und der mit diesem verbindbaren Leuchtenabdeckung (20), die eine Oberseite und einem Umfangsrand aufweist, schutzartkonform abzudichten, wobei an dem Grundkörper (30) zwei Dichtelemente ausgebildet sind, wobei ein erstes Randdichtelement (34) über einen Verbindungsarm (32) mit dem Grundkörper (30) verbunden ist und ausgebildet ist zum Abdichten eines Bereichs zwischen einer Außenseite der Leuchtenabdeckung (20) und einer Innenseite des Leuchtengehäuses, und wobei ein zweites Aufsatzdichtelement (42) vorgesehen ist, welches ausgebildet ist zum dichtenden Aufsetzen auf die Oberseite der Leuchtenabdeckung (20), und wobei das Dichtelement (28) ein einstückig angeformtes Befestigungselement (48) umfasst zum Eingreifen in eine Nut(50) an dem Leuchtengehäuse, wobei das Befestigungselement (48) zu der Nut (50) korrespondierend ausgebildet ist,
**DADURCH GEKENNZEICHNET dass** sich das Befestigungselement (35) quer zur einer durch den Grundkörper definierten Ebene von diesem erstreckt und als Einstecksteg ausgebildet ist und in die Nut einsteckbar ist, und wobei an dem als Einstecksteg ausgebildeten Befestigungselement (48) jeweils beidseitig elastische Einstecklippen angeformt sind, deren Außendurchmesser größer gestaltet ist als der Innendurchmesser der Nut (50), so dass das Befestigungselement (48) in die Nut (50) einklemmbar ist um ein Herausfallen des Dichtelements (28) aus der Nut (50) zu verhindern.

2. Feuchtraumleuchte nach Anspruch 1, **DADURCH GEKENNZEICHNET, dass** das Randdichtelement (34) mit dem Verbindungsarm (32) einen Winkelhebel bildet.

3. Feuchtraumleuchte nach einem der vorhergehenden Ansprüche, **DADURCH GEKENNZEICHNET, dass** das Randdichtelement (34) Zentriermittel für die Leuchtenabdeckung (20) umfasst.

4. Feuchtraumleuchte nach einem der vorhergehenden Ansprüche, **DADURCH GEKENNZEICHNET, dass** das Randdichtelement (34) und/oder das Aufsatzdichtelement (42) jeweils mehrere Dichtlippen umfassen.

5. Feuchtraumleuchte nach einem der vorhergehenden Ansprüche, **DADURCH GEKENNZEICHNET, dass** das Dichtelement (28) mindestens eine Strömungsreduzierungskammer umfasst, die ausgebildet ist zur Reduzierung der Strömungsgeschwindigkeit von einströmendem Strahlwasser.

6. Feuchtraumleuchte nach Anspruch 5, **DADURCH GEKENNZEICHNET, dass** zwischen dem Randdichtelement (34) und Grundkörper (30) eine erste Außentaschenkammer (44) ausgebildet ist, und dass zwischen dem Randdichtelement (34) und Aufsatzdichtelement (42) eine Innentaschenkammer (46) ausgebildet ist.

7. Feuchtraumleuchte nach einem der vorhergehenden Ansprüche, **DADURCH GEKENNZEICHNET, dass** die Nut (50) in der Oberseite des Leuchtengehäuses als Ringnut (50) ausgebildet ist, und dass außenseitig an dem Einstecksteg (48) jeweils beidseitig zwei beabstandete, elastische Einstecklippen angeformt sind, deren Außendurchmesser etwas größer gestaltet ist als ein Innendurchmesser der Ringnut (50).

8. Feuchtraumleuchte gemäß einem der vorhergehenden Ansprüche, wobei die Leuchtenabdeckung eine Durchgangsöffnung (57) für eine Halteschraube umfasst, **DADURCH GEKENNZEICHNET, dass** diese eine Schraubenabdichtanordnung zum schutzartkonformen Abdichten einer eine Durchgangsöffnung (57) in einer Leuchtenabdeckung durchdringende Halteschraube (26) mittels eines Dichtelements, dass die Halteschaube (26) einen Anpressabschnitt (23) zum flächigen Anliegen gegen die Unterseite der Leuchtenabdeckung um die Durchgangsöffnung (57) und einen, sich quer zu einer durch den Anpressabschnitt (23) definierten Ebene erstreckendes Gewindestück (58) zum Eindrehen in eine korrespondierende Gewindeöffnung an dem Leuchtengehäuse umfasst, und dass das Dichtelement als Ringdichtung (64) ausgebildet ist zum Aufliegen auf den Anpressabschnitt (23) .

9. Feuchtraumleuchte nach Anspruch 8, **DADURCH GEKENNZEICHNET, dass** die Ringdichtung (64) einen Ringabschnitt angepasst an die die Abmessung des Anpressabschnitts (23) aufweist.

10. Feuchtraumleuchte nach Anspruch 8 oder 9, **DADURCH GEKENNZEICHNET, dass** die Ringdichtung (64) an ihrem Außenrand verbreitert ist.

11. Feuchtraumleuchte nach Anspruch 8 bis 10, **DADURCH GEKENNZEICHNET, dass** die Ringdichtung (64) einen Einsteckstutzen, ausgebildet zum Einstecken in die Durchgangsöffnung (57), aufweist.

12. Feuchtraumleuchte nach einem der Ansprüche 8 bis 11, **DADURCH GEKENNZEICHNET, dass** diese ein Distanzelement zum Einsetzen zwischen der Oberseite der Leuchtenabdeckung und des Leuchtengehäuses umfasst, und dass das Distanzelement eine größere Härte als die Ringdichtung aufweist.

## Claims

1. Damp-proof lamp comprising a lamp housing with a lamp compartment for accommodating a light source and an optical system associated with said light source, as well as a lamp cover that can be connected to the lamp housing at a connection area to seal at least the lamp compartment in accordance with the protection class, wherein the connection area is sealed by means of a sealing element (28), the sealing element (28) comprising a base body (30) designed to be inserted into the lamp housing to be sealed in order to seal the connection area between the lamp housing and the lamp cover (20) connectable to it, which has a top surface and a peripheral edge, in accordance with the protection class, wherein two sealing elements are formed on the base body (30), wherein a first edge sealing element (34) is connected to the base body (30) via a connecting arm (32) and is configured to seal an area between an outside of the lamp cover (20) and an inside of the lamp housing, and wherein a second attachment sealing element (42) is provided, which is configured to be attached in a sealing manner to the top surface of the lamp cover (20), and wherein the sealing element (28) comprises a fastening element (48) integrally molded to it for engaging a groove (50) on the lamp housing, wherein the fastening element (48) is configured to correspond to the groove (50),
**CHARACTERIZED IN THAT** the fastening element (35) extends from the main body transversely to a plane defined by the main body and is formed as an insertion tab and can be inserted into the groove, and wherein elastic insertion lips whose outer diameter is larger than the inner diameter of the groove (50) are respectively molded to the fastening element formed as an insertion tab (48) on both sides, so that the fastening element (48) can be clamped into the groove (50) to prevent the sealing element (28) from falling out of the groove (50).

2. Damp-proof lamp according to claim 1, **CHARACTERIZED IN THAT** the edge sealing element (34) forms an angular lever with the connecting arm (32).

3. Damp-proof lamp according to any one of the preceding claims, **CHARACTERIZED IN THAT** the edge sealing element (34) comprises centering means for the lamp cover (20).

4. Damp-proof lamp according to any one of the preceding claims, **CHARACTERIZED IN THAT** the edge sealing element (34) and/or the attachment sealing element (42) each comprise multiple sealing lips.

5. Damp-proof lamp according to any of the preceding claims, **CHARACTERIZED IN THAT** the sealing element (28) comprises at least one flow-reduction chamber configured to reduce the flow velocity of incoming water jets.

6. Damp-proof lamp according to claim 5, **CHARACTERIZED IN THAT** a first outer pocket chamber (44) is formed between the edge sealing element (34) and the base body (30), and that an inner pocket chamber (46) is formed between the edge sealing element (34) and the top sealing element (42).

7. Damp-proof lamp according to any of the preceding claims, **CHARACTERIZED IN THAT** the groove (50) in the top surface of the lamp housing is formed as an annular groove (50), and that two spaced-apart elastic insertion lips are molded the outer side of the insertion tab (48) on each side, the outer diameter of which is designed to be slightly larger than the inner diameter of the annular groove (50).

8. Damp-proof lamp according to any one of the preceding claims, wherein the lamp cover comprises a through-hole (57) for a retaining screw, **CHARACTERIZED IN THAT** it comprises a screw sealing assembly for sealing a retaining screw (26) passing through a through-hole (57) in a lamp cover in accordance with the protection class by means of a sealing element, that the retaining screw (26) comprises a pressing section (23) for bearing flat against the underside of the lamp cover around the through-hole (57), and a threaded piece (58) extending transversely to a plane defined by the pressing section (23) for screwing into a corresponding threaded opening on the lamp housing, and that the sealing element is designed as a ring seal (64) for resting on the pressing section (23).

9. Damp-proof lamp according to claim 8, **CHARACTERIZED IN THAT** the Ring seal (64) has an annular portion adapted to the dimensions of the pressing section (23).

10. Damp-proof lamp according to claim 8 or 9, **CHARACTERIZED IN THAT** the ring seal (64) is widened at its outer edge.

11. Damp-proof lamp according to claims 8 to 10, **CHARACTERIZED IN THAT** the ring seal (64) comprises an insertion neck designed to be inserted into the through-opening (57).

12. Damp-proof lamp according to any one of claims 8 through 11, **CHARACTERIZED IN THAT** it comprises a spacer element for insertion between the top surface of the lamp cover and the lamp housing, and that the spacer element has a higher hardness than the ring seal.

## Revendications

1. Lampe pour locaux humides comprenant un boîtier de lampe muni d'un compartiment destiné à recevoir une source lumineuse et un système optique associé à cette source lumineuse, ainsi qu'un couvercle de lampe pouvant être relié au boîtier de lampe au niveau d'une zone de raccordement afin de fermer, conformément à l'indice de protection, au moins le compartiment destiné à la source lumineuse, la zone de raccordement étant rendue étanche au moyen d'un élément d'étanchéité (28), l'élément d'étanchéité (28) comprenant un corps de base (30) conçu pour être inséré dans le boîtier de lampe à rendre étanche, afin de rendre étanche, conformément à l'indice de protection, la zone de raccordement entre le boîtier de lampe et le couvercle de lampe (20) pouvant être raccordé à celui-ci, lequel couvercle présente une face supérieure et un bord périphérique, conformément à l'indice de protection, deux éléments d'étanchéité étant formés sur le corps de base (30), un premier élément d'étanchéité périphérique (34) étant relié au corps de base (30) par l'intermédiaire d'un bras de liaison (32) et étant conçu pour assurer l'étanchéité d'une zone située entre une face extérieure du couvercle de lampe (20) et une face intérieure du boîtier de lampe, et dans lequel est prévu un deuxième élément d'étanchéité rapporté (42), qui est conçu pour être posé de manière étanche sur la face supérieure du couvercle de lampe (20), et dans lequel l'élément d'étanchéité (28) comprend un élément de fixation (48) formé d'un seul tenant destiné à s'engager dans une rainure (50) sur le boîtier de lampe, l'élément de fixation (48) étant conçu pour correspondre à la rainure (50), **CARACTÉRISÉE EN CE QUE** l'élément de fixation (35) s'étend, à partir du corps de base, transversalement par rapport à un plan défini par le corps de base et est conçu comme un entretoise d'insertion pouvant être insérée dans la rainure, et dans lequel, sur l'élément de fixation (48) conçu comme une entretoise d'insertion sont formées, de chaque côté, des lèvres d'insertion élastiques dont le diamètre extérieur est supérieur au diamètre intérieur de la rainure (50), de sorte que l'élément de fixation (48) peut être bloqué dans la rainure (50) afin d'empêcher l'élément d'étanchéité (28) de tomber hors de la rainure (50).

2. Lampe pour locaux humides selon la revendication 1, **CARACTÉRISÉE EN CE QUE** l'élément d'étanchéité périphérique (34) forme un levier coudé avec le bras de liaison (32).

3. Lampe pour locaux humides selon l'une quelconque des revendications précédentes, CARACTÉRISÉEE EN CE QUE l'élément d'étanchéité périphérique (34) comprend des moyens de centrage pour le couvercle de lampe (20).

4. Lampe pour locaux humides selon l'une quelconque des revendications précédentes, **CARACTÉRISÉE EN CE QUE** l'élément d'étanchéité périphérique (34) et/ou l'élément d'étanchéité supérieur (42) comprennent chacun plusieurs lèvres d'étanchéité.

5. Lampe pour locaux humides selon l'une quelconque des revendications précédentes, **CARACTÉRISÉE EN CE QUE** l'élément d'étanchéité (28) comprend au moins une chambre de réduction de débit, conçue pour réduire la vitesse d'écoulement du jet d'eau entrant.

6. Lampe pour locaux humides selon la revendication 5, **CARACTÉRISÉE EN CE qu'**une première chambre en poche externe (44) est formée entre l'élément d'étanchéité périphérique (34) et le corps de base (30), et qu'une chambre en poche interne (46) est formée entre l'élément d'étanchéité périphérique (34) et l'élément d'étanchéité supérieur (42).

7. Lampe pour locaux humides selon l'une quelconque des revendications précédentes, **CARACTÉRISÉE EN CE QUE** la rainure (50) dans la face supérieure du boîtier de lampe est réalisée sous forme de rainure annulaire (50), et **en ce que**, sur la face extérieure de l'entretoise d'insertion (48), deux lèvres d'insertion élastiques espacées sont moulées de chaque côté, dont le diamètre extérieur est légèrement supérieur au diamètre intérieur de la rainure annulaire (50).

8. Lampe pour locaux humides selon l'une quelconque des revendications précédentes, le couvercle de lampe comportant une ouverture de passage (57) pour une vis de fixation, **CARACTÉRISÉE EN CE qu'**elle comprend un dispositif d'étanchéité de vis destiné à assurer, conformément à l'indice de protection, l'étanchéité d'une vis de fixation (26) traversant une ouverture de passage (57) dans un couvercle de lampe au moyen d'un élément d'étanchéité, **en ce que** la vis de fixation (26) comporte une partie de pressage (23) destinée à s'appuyer à plat contre la face inférieure du couvercle de lampe autour de l'ouverture de passage (57) et une partie filetée (58) s'étendant transversalement à un plan défini par la partie de pressage (23) pour être vissée dans un orifice fileté correspondant sur le boîtier de lampe, et **en ce que** l'élément d'étanchéité est réalisé sous la forme d'un joint annulaire (64) destiné à reposer sur la partie de pression (23).

9. Lampe pour locaux humides selon la revendication 8, **CARACTÉRISÉE EN CE QUE** le joint annulaire (64) présente une partie annulaire adaptée aux dimensions de la partie de pressage (23).

10. Lampe pour locaux humides selon la revendication 8 ou 9, **CARACTÉRISÉE EN CE QUE** le joint annulaire (64) est élargi au niveau de son bord extérieur.

11. Lampe pour locaux humides selon les revendications 8 à 10, **CARACTÉRISÉE EN CE QUE** le joint annulaire (64) comporte un embout d'insertion conçu pour être inséré dans l'ouverture de passage (57).

12. Lampe pour locaux humides selon l'une quelconque des revendications 8 à 11, **CARACTÉRISÉE EN CE qu'**il comprend un élément d'écartement destiné à être inséré entre la face supérieure du couvercle de lampe et le boîtier de lampe, et **en ce que** l'élément d'écartement présente une dureté supérieure à celle du joint annulaire.
